# FASCICULE DE BREVET EUROPEEN

(11) **EP 0 585 149 B1**
(45) Date de publication et mention de la délivrance du brevet: **13.03.1996**
(21) Numéro de dépôt: 93401837.5
(22) Date de dépôt: 15.07.1993
(51) Int. Cl.: G06F 12/14, G06K 19/073, G11C 7/00, G11C 8/04

(54) **Circuit de gestion de mots mémoires**
Speicherwörterverwaltungsschaltung
Memory words managing circuit

(30) Priorité: 24.07.1992 FR 9209195
(43) Date de publication de la demande: 02.03.1994
(73) Titulaire: SGS-THOMSON MICROELECTRONICS S.A., F-94250 Gentilly (FR)
(72) Inventeur: Lisart, Mathieu, F-75116 Paris (FR); Sourgen, Laurent, F-75116 Paris (FR)
(74) Mandataire: Ballot, Paul Denis Jacques

(56) Documents cités:
- EP-A- 0 065 148
- WO-A-89/03081
- DE-A- 3 709 205
- US-A- 3 264 615
- US-A- 4 744 062
- US-A- 4 931 993
- US-A- 5 119 336
- IBM TECHNICAL DISCLOSURE BULLETIN. vol. 16, no. 7 , Décembre 1973 , NEW YORK US pages 2136 - 2137 ENGER 'RANGE CHECK OF AN ADDRESS COUNTER'

## Description

La présente invention concerne un circuit de gestion des mots mémoires d'une mémoire. Cette gestion concerne aussi bien la lecture que l'effacement ou l'écriture ou l'adressage des mots mémoires de cette mémoire. Elle concerne donc tout mode de gestion. Un mode de gestion est défini dans l'invention par un mot mémoire spécial appelé un descripteur et qui est relatif aux mots mémoires d'une zone mémoire. L'invention concerne principalement mais non exclusivement, les mémoires non volatiles et dans celles-ci, celles qui sont programmables et effaçables électriquement (EEPROM) bien qu'elle puisse aussi concerner celles qui ne sont pas effaçables (EPROM).

On connaît, notamment dans les applications de type carte à puce, des partitions de mémoire dans lesquelles la mémoire non volatile est distribuée en des zones qu'on ne peut que lire, qu'on peut lire et écrire, qu'on ne peut que lire et effacer, et ainsi de suite, ou bien même qu'on ne peut même pas lire (quand il s'agit des codes secrets de la carte notamment). Normalement le système d'exploitation d'une telle puce en circuit intégré électronique comporte un micro-contrôleur qui autorise les diverses actions sur des zones de la mémoire, en fonction d'une configuration de protection qu'il reçoit par la lecture d'un descripteur de cette zone de mémoire.

On connaît notamment un arrangement dans lequel les zones mémoires utilisables en lecture, ou écriture, ou effacement, sont contiguës les unes aux autres et sont rangées dans une partie de la mémoire, vers une extrémité alors que les descripteurs de zone de ces zones mémoires sont rangés, en concordance, dans une autre partie de la mémoire, à une autre extrémité. La notion d'extrémité est une notion à la fois physique (les cellules mémoires sont rangées géographiquement à un endroit du plan mémoire au bord, au milieu, ou à un autre bord), et à la fois fonctionnelle (les adresses des différentes zones correspondent à des bits d'adresse de poids forts qui valent zéro, pour une extrémité, et un pour l'autre extrémité).

Un descripteur est un mot de la mémoire qui comporte un premier nombre de bits permettant de définir la protection de la zone mémoire, et un autre nombre de bits marquant les limites de la zone dans la mémoire. Ces limites sont constituées par des adresses de début et de fin de zone. Dans le système décrit précédemment, un descripteur de zone comporte une seule adresse comme limite : l'adresse de la fin de la zone concernée par ce descripteur. L'adresse du début de la zone concernée par ce descripteur est tout simplement l'adresse, augmentée d'une unité, du dernier mot mémoire de la zone précédente concernée par un descripteur précédent.

Un tel système fonctionne bien mais présente un inconvénient en ce sens que, notamment dans les applications avec des cartes à puce de type bancaire, l'adressage des mots de la mémoire est séquentiel. Ainsi l'accès à un mot mémoire de la mémoire ne peut être obtenu, en utilisant un compteur d'adresse, qu'après que ce compteur ait passé en revue toutes les adresses des mots précédents ce mot, depuis l'adresse origine de la mémoire (00...00). Les sorties de poids différents du compteur constituent les bits d'adresses des adresses sélectionnées. Pour avoir accès ensuite à un autre mot de la mémoire, il faut normalement, après avoir fait compter le compteur jusqu'à la dernière adresse de la mémoire, le faire recommencer jusqu'à l'adresse de cet autre mot voulu. On peut aussi dans certain cas provoquer une remise à zéro du compteur avant de recompter jusqu'à l'adresse de cet autre mot. Or le mode de gestion ou de protection de cet autre mot peut être différent du mode de gestion du mot précédent ce qui complique la manipulation concomittante, avec ce compteur, des modes de protection à respecter. On peut par exemple résoudre le problème en limitant l'excursion du compteur dans une fenêtre de comptage choisie. Mais ceci complique le circuit et réduit par ailleurs la souplesse d'utilisation.

L'invention va avoir pour effet de simplifier notablement un tel dispositif d'adressage, utilisable quand il est séquentiel, encore que le caractère séquentiel de cet adressage avec ce compteur ne soit pas complètement indispensable. L'adressage qui sera décrit est un adressage mot mémoire par mot mémoire dans la mémoire, chaque mot étant situé dans une rangée différente de cette mémoire, et dans chaque mot, bit du mot par bit du mot. Pour un mot donné, un décodeur de colonne permettra de connecter successivement chacune des lignes de bit du mot (les colonnes) à un circuit de lecture unique, tandis qu'un décodeur de rangées permettra, après la lecture d'un mot, de passer à la lecture du mot suivant dans une rangée suivante.

Dans l'invention pour remédier à ces problèmes on a procédé différemment. D'une part, on a organisé la mémoire de telle façon qu'un mot descripteur de zones conditionnant une zone soit placé dans la mémoire avec une adresse physique directement précédant les adresses physiques des mots de la mémoire concernés par ce descripteur. L'adresse physique d'un mot correspond en pratique à une rangée, une ligne de mot. Une adresse physique précédant directement une autre adresse physique est une ligne de mot adjacente à celle-ci. Il y a alors adjacence physique dans le plan mémoire, mis à part les modifications dues à la redondance. A la fin de cette zone mémoire, un autre descripteur est placé et conditionne l'utilisation d'une autre zone mémoire et ainsi de suite. Dans le descripteur de l'invention, on a introduit d'une part, en premier, des premiers bits renseignant sur le mode de gestion de la zone mémoire et d'autre part, à la suite, des deuxièmes bits renseignant sur l'adresse de la fin de cette zone mémoire. On détecte par ailleurs, à la lecture de la mémoire, l'apparition d'un descripteur de zone parce que, hormis l'adresse 00...00 qui est dans l'invention obligatoirement un descripteur de zone, on connaît l'adresse des descripteurs de zone suivant. En effet, ces adresses sont celles qui succèdent directement à la fin de zones précédentes.

Dans l'invention, au moment ou apparaît un descripteur de zone (le premier ou les suivants), d'une part on mémorise les premiers bits pour configurer l'utilisation de la zone mémoire, et d'autre part on mémorise les deuxième bits pour détecter la fin de la zone. On compare ensuite les sorties du compteur d'adresse à l'adresse de fin de zone mémorisée. Tant que cette adresse de fin de zone n'est pas atteinte, le mode de gestion de la mémoire ne change pas. Quand elle est atteinte, d'une part on remplace le mode de gestion par le mode de gestion du descripteur suivant, et d'autre part on remplace l'adresse de fin de zone précédente par une adresse de fin de zone suivante, et ainsi de suite. Ce système a alors l'avantage d'être complètement transparent vu de l'extérieur puisqu'il ne nécessite pas l'intervention d'un quelconque micro-contrôleur. Un circuit de l'invention effectue automatiquement cette opération.

Dans un perfectionnement, le mode de gestion des mots mémoires de la zone mémoire concernée est imposé, par un premier circuit logique programmable, recevant le mode de protection du descripteur, à un autre circuit logique programmable recevant lui des commandes externes à la mémoire, où la sortie d'un décodeur de commande externe à la mémoire. L'avantage du circuit de l'invention se situe dans sa simplicité compte tenu du but recherché.

L'invention a donc pour objet un circuit de gestion en lecture et/ou écriture et/ou effacement des mots mémoires d'une zone mémoire d'une mémoire de type non volatile, programmable électriquement, à adressage séquentiel, comportant:
- dans cette mémoire, une partition de la mémoire en plusieurs zones, tous les mots mémoires d'une zone étant affectés d'un même mode de gestion et possédant des adresses consécutives, les zones étant contiguës, au moins un mot mémoire de cette mémoire jouant un rôle de descripteur de zone stocké dans la mémoire servant à définir par des premiers bits un mode de gestion d'une zone mémoire, et par des deuxièmes bits une adresse de fin de cette zone mémoire,
- un compteur d'adresses pour débiter des signaux d'adresses séquentielles,
   caractérisé en ce que
- l'adresse du descripteur de zone de la zone mémoire est la première adresse des mots mémoires de cette zone mémoire,
- ce descripteur de zone comporte comme information ladite adresse correspondant à la fin de la zone mémoire, et donc à un descripteur suivant d'une zone suivante,
   et en ce que le circuit de gestion comporte
- un premier circuit de mémorisation temporaire pour mémoriser le mode de gestion de la zone mémoire,
- un deuxième circuit de mémorisation temporaire pour mémoriser l'adresse correspondant audit descripteur suivant, ces mémorisations temporaires durant pendant l'adressage des mots de la zone mémoire correspondant à ce descripteur de zone,
- un comparateur pour comparer une adresse courante délivrée par le compteur d'adresse à l'adresse mémorisée dans le deuxième circuit de mémorisation, et pour délivrer un signal de chargement, dans un circuit de décision, d'un mode de gestion correspondant aux premiers bits du descripteur de zone suivant quand le comparateur reçoit des mêmes adresses.

L'invention sera mieux comprise à la lecture de la description qui suit et à l'examen des figures qui l'accompagnent, celles-ci ne sont données qu'à titre indicatif et nullement limitatif de l'invention. Les figures montrent :
- figure 1 : un circuit de gestion conforme à l'invention ;
- figure 2 : un exemple de la structure d'un mot mémoire jouant le rôle de descripteur ;
- figures 3 et 4 : les circuits de mémorisation utilisés pour mémoriser respectivement le mode de gestion des mots de la zone mémoire , et l'adresse de fin de zone mémoire, ainsi que le circuit de comparaison servant à produire un signal de fin de zone ;
- figure 5 : un diagramme temporel montrant la production d'un signal CTLZ de contrôle de zone produit par la lecture d'un descripteur.

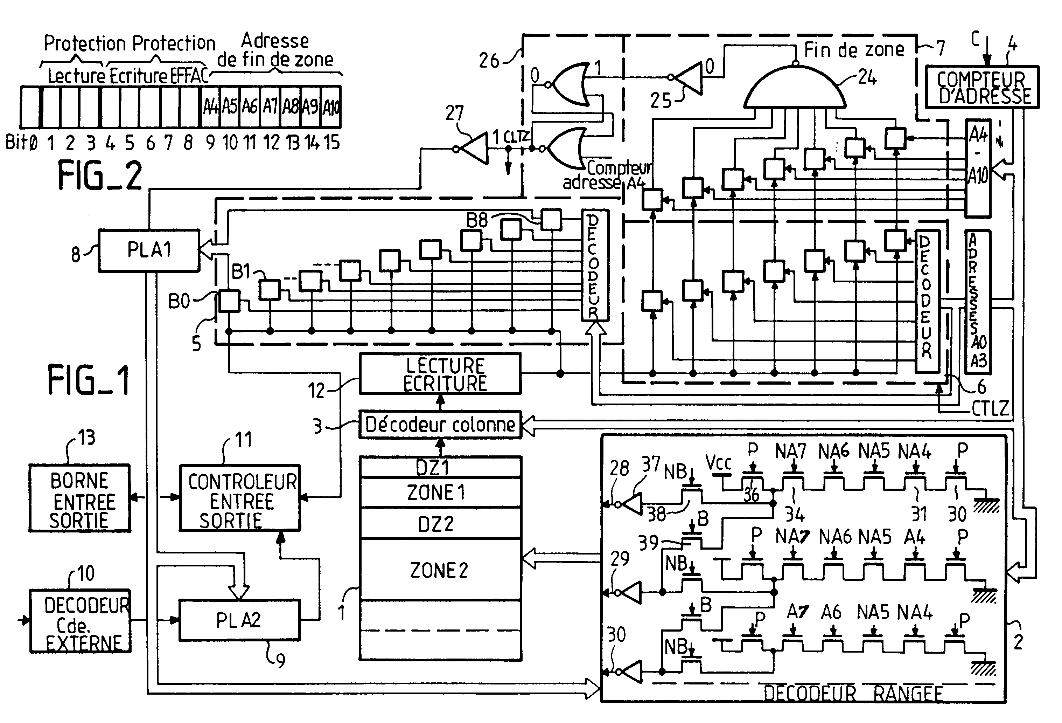

La figure 1 montre un circuit de gestion des mots mémoires d'une mémoire 1. La mémoire 1 est répartie en plusieurs zones, par exemple les zones ZONE 1 et ZONE 2. Tous les mots mémoire d'une zone sont affectés d'un même mode protection, ou plus généralement de gestion. Les mots mémoire d'une zone possèdent des adresses physiques consécutives. On accède aux mots mémoires de la mémoire par un décodeur de rangée 2. Les adresses consécutives, ou encore adjacentes, sont des lignes de mot, des connexions électriques, auxquelles on peut accéder en modifiant le bit de poids le plus faible de l'adresse rangée. Les zones sont contiguës. Ainsi par exemple la ZONE 2 est collée à la ZONE 1 dans la mémoire 1. Ceci veut dire que les adresses des mots d'extrémité de ces zones sont consécutives.

Au moins un mot mémoire de chaque zone, le premier de cette zone, joue un rôle de descripteur de la zone. Il sert à définir par des premiers bits, les bits 1 à 8, figure 2, dans un exemple, un mode de gestion de la zone mémoire. Il sert à définir par des deuxièmes bits, les bits 9 à 15 dans le même exemple, une adresse de fin de la zone mémoire concernée. Dans l'exemple décrit dans l'invention un mot mémoire a 16 bits. Pour accéder à chacun des bits d'un mot on utilise un décodeur de lignes de bit 3, dit aussi décodeur de colonnes.

Un compteur d'adresse 4, dans un exemple à 11 sorties A0 - A10, délivre sur ses quatre sorties de poids faible, A0 - A3, des moments d'adresse permettant d'accéder successivement à chacun des bits 0 à 15 d'un mot mémoire. Ces quatre sorties de poids faible sont donc introduites en entrée du décodeur colonne 3. On pourra facilement généraliser l'invention à d'autres situations, par exemple, s'il s'agit de gérer des mots de 32 bits, ou au contraire plus petits de 8 bits seulement. Les bits de poids fort du compteur d'adresse, les bits A4 à A10, ou plus, sont utilisés dans le décodeur rangée 2 pour accéder successivement à chacun des mots mémoires de la mémoire.

Dans l'invention, un premier circuit de mémorisation 5 permet de mémoriser un mode de protection ou gestion de la zone mémoire pour laquelle on est en train de lire un descripteur. Un deuxième circuit de mémorisation 6 permet de mémoriser l'adresse de la fin de la zone correspondant à ce descripteur. L'adresse de fin de zone correspond à l'adresse d'un descripteur suivant. Le deuxième circuit de mémorisation 6 est relié à un comparateur 7 qui reçoit d'autre part les moments d'adresse rangée provenant du compteur d'adresse 4. La sortie de ce comparateur 7 produit, au signe près, le signal de fin de zone provoquant le chargement, puis le maintien, des premiers bits dans un circuit logique programmable 8-9.

Le circuit logique programmable sert de circuit de décision et comporte, de préférence, une première table de décision 8 contrôlée par les premiers bits du descripteur, et une deuxième table de décision 9. La deuxième table de décision 9 est contrôlée par la sortie de la première table 8 et reçoit, pour les filtrer, des commandes externes, de préférence préalablement filtrées par un décodeur de commandes externes 10. Quand un descripteur de zone a été lu, les bits de protection de ce descripteur de zone ont été chargés dans la première table 8, alors que l'adresse de la fin de cette zone a été chargée dans le circuit de la mémorisation 6.

Un mot donné de la mémoire, adressé en provoquant un comptage adéquat du compteur d'adresse 4 au moyen d'une commande de comptage C, peut être soumis à des commandes filtrées par la deuxième table 9. La commande de comptage C est un simple signal impulsionnel dont les impulsions sont comptées par le compteur. Ces commandes filtrées sont appliquées à ce mot par l'intermédiaire d'un contrôleur 11 d'entrée/sortie. Le contrôleur 11 est placé entre un circuit 12 de lecture-écriture-effacement de la mémoire et des bornes 13 d'entrée/sortie à cette mémoire. Les circuits 8 à 13 sont de type connu et ne nécessitent pas de description particulière. Cependant la réalisation d'un circuit de décision avec deux tables 8 et 9 est spécifique à l'invention en ce sens que la deuxième est contrôlée par la première.

Comme on peut le voir sur la figure 1, le circuit de mémorisation 5 comporte 9 bascules de B0 à B8 pour stocker les bits 0 à 8 du descripteur. Dans le même exemple, le circuit de mémorisation 6 comporte 7 bascules pour mémoriser les moments d'adresse A4 à A10 de l'adresse de la fin de zone.

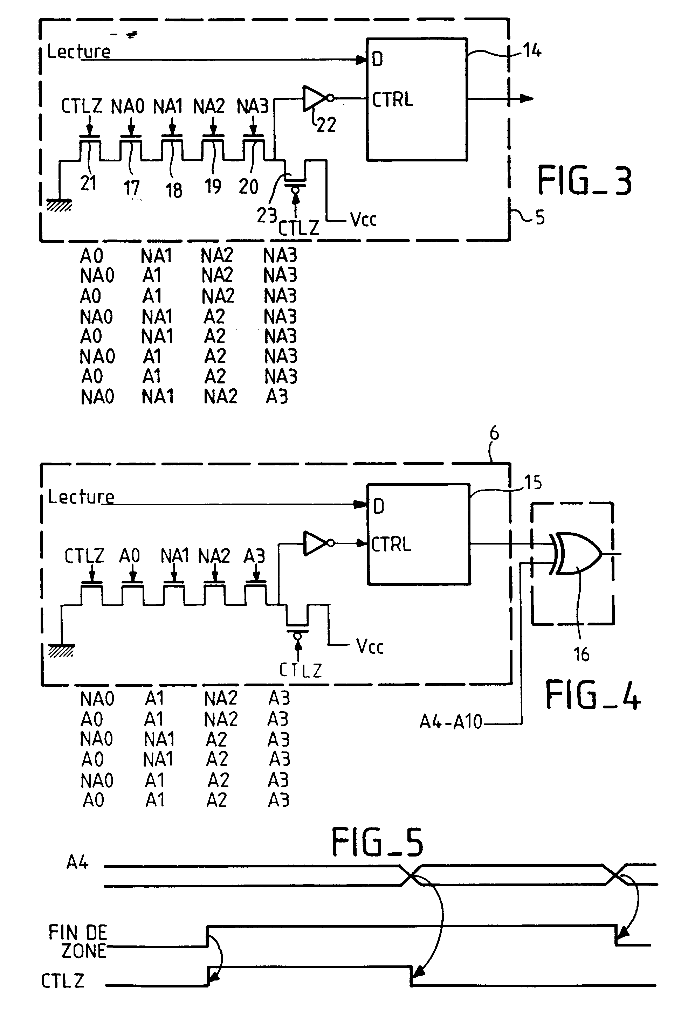

A l'aide des figures 3 et 4 on va voir comment fonctionnent respectivement les circuits 5 et 6. Les circuits 5 et 6 sont de types similaires et comportent chacun un ensemble de registres tampons pour stocker chacun l'état d'un bit. Par exemple, on a montré sur les figures 3 et 4, les registres tampons respectivement 14 et 15. Sur leur entrée de donnée, les registres 14 et 15 reçoivent le signal de lecture en provenance du circuit de lecture 12. Comme il s'agit d'une lecture bit à bit la liaison électrique de lecture est commune à toutes les entrées des registres tels que 14 et 15 (voir figure 1). Les registres 14 et 15 sont par ailleurs pilotés par des signaux de contrôle appliqués sur une entrée de contrôle CTRL. Chacun des signaux de contrôle est obtenu par un décodage des moments d'adresse A0, A1, A2 et A3 délivrés par le compteur d'adresse 4. Par exemple, pour le stockage du bit 0 du descripteur dans le registre 14, le décodeur d'adresse est constitué de 4 transistors 17 à 20, de type N, en série. Les transistors 17 à 20 reçoivent respectivement les signaux d'adresse NA0, NA1, NA2, NA3. A l'origine du comptage des bits d'un mot, d'une part les quatre adresses A0 à A3 sont nulles (donc les signaux NA0-NA3 valent tous 1), et d'autre part, un signal CTLZ appliqué sur un transistor 21 en série avec les transistors 17 à 20 vaut 1. On verra par la suite comment le signal CTLZ est produit. Le transistor 21 est relié par ailleurs à la masse.

Dans ces conditions, au démarrage du comptage des bits d'un mot, l'entrée d'un inverseur 22 relié à cette série de transistors 17 - 21 est porté à 0. La sortie de l'inverseur 22 est porté à 1. Le signal de contrôle de la bascule 14 vaut alors 1, et pendant la lecture du premier bit du premier mot de la mémoire, la bascule 14 enregistre l'état du bit 0 du premier descripteur, le descripteur DZ1. Pour les autres registres du circuit de mémorisation 5, on a seulement fait figurer sous la figure 3 les états de décodage des moments d'adresse A0 à A3 correspondant applicables sur leur transactions de décodage. Ainsi le deuxième bit du descripteur DZ1, le bit pour lequel seul A0 vaut 1 est chargé dans un registre tampon consécutif au registre 14. Le registre 14 quand à lui n'enregistre pas à ce moment la nouvelle valeur du bit lue par le circuit de la lecture 12 puisque l'inverseur 22, instable, a une sortie qui retombe à 0 dès que son entrée est en l'air du fait que l'un au moins de ses transistors 17 à 21 se bloque. Ainsi de suite chacun des bits 0 à 8 du descripteur est stocké dans les bascules de B0 à B8 du circuit 5.

Le compteur d'adresse continue ensuite à compter et on mémorise alors, d'une manière similaire dans le circuit de mémorisation 6 les deuxièmes bits du descripteur DZ1

Ces deuxièmes bits correspondent à l'adresse de la fin de la zone 1. On peut donc considérer que les registres tampons tels que le registre 15 comportent, à l'issue de la lecture du descripteur, l'adresse du prochain descripteur. Chacune des sorties des bascules 14 ou 15 du circuit 5 ou du circuit 6 est envoyée respectivement à la première table de décision 8 ou au comparateur 7. Le comparateur 7 est constitué essentiellement d'un ensemble de portes ou-exclusif 16, XOR, figure 4, dont la sortie vaut 1 si les signaux appliqués sur les deux entrées sont différents l'un de l'autre, et dont la sortie vaut 0 dans le cas contraire. L'adresse de fin de la zone ZONE 1 ne peut pas être l'adresse du descripteur DZ1 lui-même. En conséquence, les moments d'adresse A4 à A10 stockés dans les registres tampon 15 sont, globalement, différents de 0. En conséquence, au moins une des portes ou-exclusif 16 délivre un 0 en sortie. Les sorties de toutes les portes ou-exclusif 16 sont reliés ensemble à une porte NON-ET 24, elle même en série avec un inverseur 25. Une fois qu'un descripteur de zone a été lu, la sortie de l'inverseur 18 est donc porté à 0 jusqu'à la lecture d'un descripteur suivant.

Les portes ou-exclusif 16 sont ici au nombre de sept. Elles reçoivent respectivement chacune, en plus du signal des registres tampons auquels elles sont reliées, un des signaux d'adresse A4 à A10. Les portes 16 dans leur ensemble font la comparaison de l'adresse courante avec l'adresse mémorisée dans le registre tampon 15. La sortie de l'inverseur 25 est reliée à un circuit logique 26 comportant 2 portes NON-OU, NOR, montées en cascade. L'autre entrée de ce circuit logique 19 reçoit le signal de transition d'adresse de l'adresse A4 : l'adresse de poids le plus faible de l'adressage des rangées.

La figure 5 montre d'une part l'action dans le temps du signal de fin de zone disponible en sortie de l'inverseur 25, et d'autre part l'action de la transition du moment d'adresse A4. Ces deux signaux se combinent dans le circuit 26 pour produire un signal impulsionnel CTLZ. Le signal CTLZ est le signal de contrôle de zone. 11 est appliqué d'une part comme du précédemment sur des transistors tels que 21 des circuits de mémorisation 5 et 6, et d'autre part sur des transistors 23 de type P. Les transistors 23 permettent, en dehors des moments de la lecture d'un descripteur, lorsque le signal CTLZ vaut zéro, de relier les entrées des inverseurs 22 à l'alimentation positive Vcc, et donc d'invalider une action de mémorisation d'une autre valeur dans les registres tampons 14, 15.

Le fonctionnement du dispositif est le suivant. Au moment où on arrive à la fin d'une zone mémoire, le compteur d'adresse 4 délivre en sortie des moments d'adresse A4 à A10 correspondant au prochain descripteur. Dans ces conditions, les bascules XOR telles que 16 reçoivent toutes respectivement, la même chose sur chacune de leurs deux entrées. Elles délivrent donc toutes en sortie un 1. La porte NON-ET 24 et l'inverseur 25 et 28 transforment cette conjonction en un signal positif en sortie. Ce signal positif (à 1) est transformé en un signal CTLZ passant à 1 par le circuit logique 26.

Ce signal CTLZ passant à 1 provoque la mémorisation du descripteur suivant, par exemple DZ2, dans les circuits de mémorisation 5 et 6. Dès que le descripteur de zones suivant est lu dans la mémoire, le circuit de comparaison 7 détecte une discordance sur au moins un des moments d'adresse. Une au moins des portes XOR bascule : passe à 0. En conséquence, la sortie du circuit logique 26 passe à 0 également. De toute façon, la détection du changement d'adresse du moment d'adresse A4, à la fin de cette mémorisation, bloque les mémorisations dans les circuits 5 et 6. Elle provoque par ailleurs le transfert dans le circuit logique programmable 8 de la configuration de protection stockée dans le circuit 5. Ceci est obtenu à l'aide d'un inverseur 27. Dès que CTLZ tombe à 0, NCTLZ (le signal complémentaire) remonte à 1, et le circuit 8 reçoit les données mémorisées dans le circuit 5.

Une particularité de l'invention est de permettre également un fonctionnement, dit en mode boulier, de la mémoire. Un boulier est une structure dans laquelle des boules peuvent être comptabilisées sur une ligne, par exemple toutes déplacées vers la gauche sur cette ligne. Ceci implique, quand toutes les boules d'une ligne ont été déplacées, le déplacement dans une ligne suivante, d'une première boule, ainsi que le retour à leur position d'origine des boules de la ligne précédente. Avec des mémoires, un fonctionnement en mode boulier consiste à programmer bit après bit chacun des bits d'un mot mémoire puis, à effacer tous les bits de ce mot mémoire lorsqu'on programme un premier bit d'un mot mémoire suivant. On utilisera ici la notion de boulier même quand il ne sera pas question d'effacer un mot suivant au précédent, mais dès qu'il sera question d'y accéder en fonction d'une action effectuée sur un mot précédent ou suivant respectivement.

Dans l'invention, la notion de suivant sera remplacé par une notion d'antécédent compte tenu de l'adressage séquentiel, mais le principe reste le même. Dans ce but le décodeur rangée est modifié par rapport à sa structure habituelle. Un décodeur rangée comporte normalement, pour accéder à chaque rangée telle que 28 à 30 de la mémoire, un ensemble de transistors tels que 31 à 34, de type N, montés en série entre la masse et l'alimentation électrique. Ces transistors reçoivent sur leur grille de commande des signaux d'adresse tels que NA4 ou A4, NA5 ou A5 et ainsi de suite jusqu'à A10. Ces transistors sont par ailleurs montés entre deux transistors 35 et 36 recevant sur leur grille un signal P de validation du fonctionnement du décodeur rangée. Les transistors 35 et 36 sont de type opposé, le transistor 35 étant de type N, le transistor 36 étant de type P. Les transistors 31 et 36 sont connectés pour la lecture entre Vcc et la masse. Lorsque les transistors 31 à 34 correspondant à une adresse reçoivent ce signal d'adresse, ils se mettent en conduction et portent à 0 l'entrée d'un inverseur 37 relié à une ligne 28 sélectionnée. La sortie de cet inverseur se porte à 1 : la ligne 28 est sélectionnée, pas les autres.

Dans l'invention on a rajouté, entre la série des transistors 31 à 34 et l'entrée de chacun des inverseurs tel que 37, un transistor N tel que 38. Ce transistor 38 reçoit un signal NB qui est à l'état actif lorsque toute la zone mémoire concernée n'est pas une zone boulier : lorsqu'elle est une zone mémoire normale. Par contre, lorsqu'on a affaire à une zone boulier, le signal NB est inactif. Dans ce cas le transistor 38 découple la sélection de la ligne 28. Un transistor N 39, recevant lui le signal B complémentaire de NB est connecté entre la série des transistors 31 à 34 d'une ligne (28) et l'entrée d'un inverseur d'une ligne (29) adjacente à cette ligne. Les adresses de ces lignes sont consécutives. La ligne précédente correspond aux poids forts du boulier, la ligne suivante aux poids faibles. Le transistor 39 permet de sélectionner la ligne 29 en adressant en fait la ligne 28. Un jeu de transistors tels que 38 et 39 est ainsi installé à chaque fois, d'une part en série dans le circuit de sélection d'une ligne de mot 28 (transistor 38), et d'autre part (transistor 39) entre ce circuit de sélection et le circuit de sélection d'une ligne de mot 29 suivante. Les signaux B ou NB sont délivrés, soit directement par le circuit de mémorisation 5 soit par une sortie de la première table logique programmable 8, par un décodage du bit 0 du descripteur de zone. Ce bit 0 est affecté à cette fonction. Quand il vaut 1 la zone est une zone boulier, une zone normale dans le cas contraire. Le fonctionnement est le suivant. On peut produire le signal B, ou le signal NB, en fonction d'une commande externe appliquée. Il suffit que le circuit de décision 9 possède une sortie appliquée en conséquence sur le décodeur 2. Ceci est matérialisé par la double flèche issue du circuit 9. Ceci signifie que sans faire compter le compteur on peut accéder et agir sur l'un ou l'autre des lignes 28 ou 29.

L'effet de ce fonctionnement en boulier consiste alors à décaler l'adresse, dans un but d'effacement ou autre, de sélection d'une rangé dans la mémoire. Ceci est utilisé, notamment par une application externe de type boulier, pour effacer une rangée suivante pleine au moment même où on écrit dans une rangée précédente. La notion de ligne précédente ou suivante peut être inversée. Il suffit de relier le transistor 39 à l'entrée d'un inverseur d'une ligne précédente.

Une application boulier est particulièrement intéressante dans une opération de contrôle d'unités de prépaiement pour des cartes à puce. Dans l'invention, le fait d'associer des notions de code boulier à la notion de descripteur de zone permet, par exemple en modifiant la valeur du descripteur de zones, notamment l'adresse de fin de zone, de déterminer, pour un circuit physiquement le même des quantités d'unités de prépaiement différentes. Il permet également en rajoutant une zone boulier de revalider une carte à puce.

## Revendications

1. Circuit de gestion en lecture et/ou écriture et/ou effacement des mots mémoires d'une zone mémoire (ZONE 1 ...) d'une mémoire (1) de type non volatile, programmable électriquement, à adressage séquentiel, comportant:
- dans cette mémoire, une partition de la mémoire en plusieurs zones (ZONE 1 ...), tous les mots mémoires d'une zone étant affectés d'un même mode de gestion et possédant des adresses consécutives, les zones étant contiguës, au moins un mot mémoire de cette mémoire jouant un rôle de descripteur de zone (DZ1 ...) stocké dans la mémoire servant à définir par des premiers bits un mode de gestion d'une zone mémoire (ZONE 1 ...), et par des deuxièmes bits une adresse de fin de cette zone mémoire,
- un compteur d'adresses (4) pour débiter des signaux d'adresses séquentielles,
caractérisé en ce que
- l'adresse du descripteur de zone (DZ1) de la zone mémoire (ZONE 1) est la première adresse des mots mémoires de cette zone mémoire (ZONE 1),
- ce descripteur de zone (DZ1) comporte comme information ladite adresse correspondant à la fin de la zone mémoire (ZONE 1), et donc à un descripteur suivant (DZ2) d'une zone suivante (ZONE 2),
et en ce que le circuit de gestion comporte
- un premier circuit de mémorisation temporaire (5) pour mémoriser le mode de gestion de la zone mémoire (ZONE 1),
- un deuxième circuit de mémorisation temporaire (6) pour mémoriser l'adresse correspondant audit descripteur suivant (DZ2), ces mémorisations temporaires durant pendant l'adressage des mots de la zone mémoire (ZONE 1) correspondant à ce descripteur de zone (DZ1),
- un comparateur (7) pour comparer une adresse courante délivrée par le compteur d'adresse à l'adresse mémorisée dans le deuxième circuit de mémorisation (6), et pour délivrer un signal de chargement (CTLZ), dans un circuit de décision (8,9,2), d'un mode de gestion correspondant aux premiers bits du descripteur de zone suivant (DZ2) quand le comparateur reçoit des mêmes adresses.

2. Circuit selon la revendication 1, caractérisé en ce que
- le deuxième circuit de mémorisation temporaire (6) comporte un décodeur d'adresses, contrôlé par le signal de chargement (CTLZ), pour remplacer la mémorisation d'une adresse correspondant à un descripteur de zone (ZONE 1) par une adresse correspondant à un descripteur de zone suivante (ZONE 2).

3. Circuit selon l'une quelconque des revendications 1 à 2, caractérisé en ce que
- le premier circuit de mémorisation temporaire (5) comporte un décodeur d'adresses, contrôlé par le signal de chargement (CTLZ), pour remplacer la mémorisation d'un mode de gestion d'une zone mémoire (ZONE 1) par un mode de gestion d'une zone mémoire suivante (ZONE 2).

4. Circuit selon l'une quelconque des revendications 1 à 3, caractérisé en ce que
- le comparateur (7) comporte un jeu de portes XOR (16) reliées à un circuit logique.

5. Circuit selon l'une quelconque des revendications 1 à 4, caractérisé en ce que
- le circuit de décision comporte une première table (8) de décision contrôlée par les dits premiers bits, et une deuxième table (9) de décision, contrôlée par la première table, et filtrant des instructions extérieures que cette deuxième table reçoit,
- la première table (8) étant validée par le signal de chargement (CTLZ).

6. Circuit selon l'une quelconque des revendications 1 à 5, caractérisé en ce que
- le circuit de décision comporte un circuit de décalage d'adresses (2) rangées de la mémoire pour permettre un fonctionnement en mode boulier de cette mémoire,
- ce circuit de décalage (2) comportant sur chaque rangée une porte (38) de validation de la sélection de cette rangée en parallèle avec une porte (39) de sélection d'une rangée contiguë suivante, ces portes recevant respectivement un signal de désactivation (NB) ou d'activation (N) en mode boulier transmis par le circuit de décision.

## Patentansprüche

1. Verwaltungsschaltung zum Lesen und/oder Schreiben und/oder Löschen von Speicherwörtern in einem Speicherbereich (Bereich 1 ...) eines nichtflüchtigen Speichers (1), der elektrisch programmierbar und sequentiell adressierbar ist, mit:
- einer in dem Speicher vorgesehenen Einteilung in mehrere Bereiche (Bereich 1 ...), wobei alle Speicherwörter eines Bereichs einem gleichen Verwaltungsmodus zugeordnet werden und aufeinanderfolgende Adressen aufweisen, die Bereiche aneinandergrenzend ausgebildet sind und mindestens ein Speicherwort des Speichers die Rolle eines Deskriptors auf den Bereich (DZ1 ...) darstellt, der im Speicher gespeichert ist und durch erste Bits einen Verwaltungsmodus eines Speicherbereichs (Bereich 1 ...) definiert und durch zweite Bits eine Endadresse des Speicherbereichs bildet, und
- einem Adressenzähler (4) zum Ausgeben von Signalen der sequentiellen Adressen,
- **dadurch gekennzeichnet**, daß
- die Adresse des Deskriptors des Bereichs (DZ1) des Speicherbereichs (Bereich 1) die erste Adresse der Speicherwörter des Speicherbereichs (Bereich 1) darstellt,
- der Deskriptor der Zone (DZ1) als Information diese Adresse entsprechend dem Ende des Speicherbereichs (Bereich 1) enthält und folglich entsprechend einem folgenden Deskriptor (DZ2) eines folgenden Bereichs (Bereich 2),
und dadurch, daß die Schaltung zum Verwalten weiterhin enthält:
- eine erste temporäre Speicherschaltung (5) zum Speichern des Verwaltungsmodus des Speicherbereichs (Bereich 1),
- eine zweite temporäre Speicherschaltung (6) zum Speichern der Adresse entsprechend dem genannten folgenden Deskriptor (DZ2), wobei die temporäre Speicherung während der Adressierung der Wörter des Speicherbereichs (Bereich 1) entsprechend des Deskriptors des Bereichs (DZ1) andauert,
- einen Vergleicher (7) zum Vergleichen einer aktuellen von dem Adressenzähler zugeführten Adresse mit der Speicheradresse in der zweiten Speicherschaltung (6) und zum Abgeben eines Ladesignals (CTLZ) in eine Entscheidungsschaltung (8, 9, 2) mit einem Verwaltungsmodus, der den ersten Bits des Deskriptors des folgenden Bereichs (DZ2) entspricht, wenn der Vergleicher dieselbigen Adressen empfängt.

2. Schaltung nach Anspruch 1, dadurch gekennzeichnet, daß
- die zweite temporäre Speicherschaltung (6) einen Adreßdecoder enthält, der durch das Ladesignal (CTLZ) gesteuert ist, zum Ersetzen der Speicherung einer Adresse entsprechend einem Deskriptor des Bereichs (Bereich 1) durch eine Adresse entsprechend einem Deskriptor des folgenden Bereichs (Bereich 2).

3. Schaltung nach irgendeinem der Ansprüche 1 bis 2, dadurch gekennzeichnet, daß
- die erste temporäre Speicherschaltung (5) einen Adreßdecoder enthält, der durch das Ladesignal (CTLZ) gesteuert ist, zum Ersetzen der Speicherung eines Verwaltungsmodus eines Speicherbereichs (Bereich 1) durch einen Verwaltungsmodus eines folgenden Speicherbereichs (Bereich 2).

4. Schaltung nach irgendeinem der Ansprüche 1 bis 3, dadurch gekennzeichnet, daß
- der Vergleicher (7) einen Satz von XOR-Gattern (16) enthält, die mit einer Logikschaltung verbunden sind.

5. Schaltung nach irgendeinem der Ansprüche 1 bis 4, dadurch gekennzeichnet, daß
- die Entscheidungsschaltung eine erste Entscheidungstabelle (8) enthält, die durch die besagten ersten Bits gesteuert ist und eine zweite Entscheidungstabelle (9), die durch die erste Tabelle gesteuert ist, und die die von der zweiten Tabelle empfangenen externen Instruktionen filtert,
- wobei die erste Tabelle (8) durch das Ladesignal (CTLZ) freigegeben wird.

6. Schaltung nach irgendeinem der Ansprüche 1 bis 5, dadurch gekennzeichnet, daß
- die Entscheidungsschaltung eine Verschiebeschaltung (2) von Adressen enthält, die in dem Speicher angeordnet sind, zum Erlauben eines Funktionierens in einem Rechenmodus des Speichers,
- wobei die Verschiebeschaltung (2) für jede Reihe ein Gatter (38) zur Gültigerklärung der Auswahl dieser Reihe parallel mit einem Gatter (39) zur Auswahl einer angrenzenden, folgenden Reihe enthält, wobei die Gatter jeweils ein Deaktivierungssignal (NB) oder ein Deaktivierungssignal (N) in einem Rechenmodus empfangen, übertragen durch die Entscheidungsschaltung.

## Claims

1. Circuit for the management of reading and/or writing and/or erasure of memory words in a memory area (AREA 1 ...) of an electronically programmable memory (1) of the nonvolatile type with sequential addressing, including:
- in this memory, a partition of the memory into several areas (AREA 1 ...), all the memory words in an area being given the same management mode and having consecutive addresses, the areas being adjacent, at least one memory word in this memory operating as an area descriptor (DZ1 ...) stored in the memory serving to define by first bits a management mode for a memory area (AREA 1 ...), and by second bits an end address for this memory area,
- an address counter (4) for delivering sequential address signals,
characterised in that
- the address of the area descriptor (DZ1) for the memory area (AREA 1) is the first address of the memory words in this memory area (AREA 1),
- this area descriptor (DZ1) includes as information the said address corresponding to the end of the memory area (AREA 1), and therefore to a following descriptor (DZ2) of a following area (AREA 2),
and in that the management circuit has
- a first temporary storage circuit (5) for storing the management mode for the memory area (AREA 1),
- a second temporary storage circuit (6) for storing the address corresponding to the said following descriptor (DZ2), these temporary storages lasting during the addressing of the words of the memory area (AREA 1) corresponding to this area descriptor (DZ1),
- a comparator (7) for comparing a current address delivered by the address counter to the address stored in the second storage circuit (6), and for delivering a signal (CTLZ) for the loading, in a decision circuit (8, 9, 2), of a management mode corresponding to the first bits of the following area descriptor (DZ2) when the comparator receives identical addresses.

2. Circuit according to Claim 1, characterised in that
- the second temporary storage circuit (6) has an address decoder, controlled by the loading signal (CTLZ), for replacing the storage of an address corresponding to an area descriptor (AREA 1) with an address corresponding to a descriptor of a following area (AREA 2).

3. Circuit according to either one of Claims 1 to 2, characterised in that
- the first temporary storage circuit (5) has an address decoder, controlled by the loading signal (CTLZ), for replacing the storage of a management mode for a memory area (AREA 1) with an management mode for a following memory area (AREA 2).

4. Circuit according to any one of Claims 1 to 3, characterised in that
- the comparator (7) has a set of exclusive-OR gates (16) connected to a logic circuit.

5. Circuit according to any one of Claims 1 to 4, characterised in that
- the decision circuit has a first decision table (8) controlled by the said first bits, and a second decision table (9), controlled by the first table, and filtering external instructions received by this second table.
- the first table (8) being validated by the loading signal (CTLZ).

6. Circuit according to any one of Claims 1 to 5, characterised in that
- the decision circuit has a circuit (2) for shifting row addresses in the memory so as to enable this memory to operate in abacus mode,
- this shift circuit (2) having on each row a gate (38) for validating the selection of this row in parallel with a gate (39) for selecting a following adjacent row, these gates receiving respectively a signal for deactivation (NB) or activation (N) in abacus mode, transmitted by the decision circuit.
